# EUROPEAN PATENT APPLICATION

(11) **EP 1 912 044 A1**
(43) Date of publication of application: **16.04.2008**
(21) Application number: 07018717.4
(22) Date of filing: 24.09.2007
(51) Int. Cl.: G01D 3/00, A61F 4/00, G06F 3/00

(54) **Switch arrangement**

(30) Priority: 13.10.2006 GB 0620332
(71) Applicant: Malvern Scientific Solutions Limited, Suckley Worcestershire WR6 5DR (GB)
(72) Inventor: Beale, Marc Ivor John, Suckley Worcestershire WR6 5DR (GB)
(74) Representative: Jackson, Derek Charles

(57) **Abstract**

A switching arrangement includes a sensor (1) for detecting physical actions of a user (3) within a region of space in which the user is located. The sensor generates an output signal representative of a detected physical action, the signal being received by a signal-processing system (5). The signal-processing system is adapted to analyse the output signal to determine whether the user has made a deliberate physical action and to actuate a switch (9) on detection of such a deliberate physical action.

## Description

This invention relates to a switch arrangement which allows persons with physical disabilities or persons physically constrained by clothing, environment or other factors to activate one or more switches to control equipment, for example for communication and/or environmental control purposes, or a computer.

In order for a conventional switch to work it is necessary for a physical action to be applied. The physical action is dependant on the design of the switch, but comprises an increase in pressure on a component of the switch, or approaching to within the activation range of a proximity device, and an associated physical movement of a part of the user's body, usually a finger.

The result of the physical action is to cause a crossing of a switching boundary between the region in space which is associated with an "off" state and the region in space which relates to an "on" state.

The operation of a conventional switch requires the user to perform a sequence of steps. The user must move to the switch and make the required physical action to cause a crossing of the switching boundary. It is also necessary for the user to be able to return the switch to its original state to enable further operation of the switch.

Whilst these operations are performed automatically by many users, conventional switches are also provided to individuals with physical disabilities to control technology for communication and/or environmental control purposes.

Many disabled users encounter problems when using such conventional switches.

These problems include being able to reach the switch without the aid of an assistant, performing the physical activity required to activate the switch and performing the required activity to return the switch to its original configuration. In extreme cases the user may only have very limited movement and the only physical action available to him may be a slight movement of the head, a finger, or eyes.

Other problems that may be encountered concern the ability of the disabled user to return his own body to a position where he can use the switch again, and unintentional operation of the switch due to involuntary body movements.

It is therefore an object of the present invention to provide a switch arrangement to overcome or minimise these problems.

According to one aspect of the present invention there is provided a switching arrangement comprising:
a sensor for detecting physical actions of a user within a region of space in which the user is located, the sensor generating an output signal representative of a detected physical action; and
a signal-processing system for receiving the output signal of the sensor, the signal-processing system being adapted to analyse the output signal to determine whether the user has made a deliberate physical action and for actuating at least one switch on detection of such a deliberate physical action.

According to another aspect of the present invention there is provided a method for effecting switching comprising the steps of:
detecting physical actions of a user within a region of space in which the user is located, and generating a signal representative of a detected physical action; and
processing the generated signal of the sensorto determine whetherthe user has made a deliberate physical action and actuating at least one switch on detection of such a deliberate physical action.

The signal representative of the detected physical actions may be analysed, using algorithms familiar to those skilled in the art, to classify the movement into one or more categories of deliberate physical actions, each of these resulting in a separate switching action.

A deliberate physical action may be defined in terms of the size range of a movement, for example greater than 5 mm but less than 50 mm.

Alternatively, or additionally, a deliberate physical action may be defined in terms of the time at which a movement occurs, for example three movements of greater than 5 mm within 10 seconds.

Alternatively, or additionally, a deliberate physical action may be defined in terms of the direction of a movement, for example substantially side-to-side and/or substantially to-and-fro.

The generated signal may be an analogue signal. The analogue signal may be processed to determine whether it has a predetermined value, for example whether it exceeds a predetermined threshold or falls within a predetermined range.

The signal processing system may be adapted to determine the nature of the deliberate physical action made by the user, for example in terms of size, direction, time or any combination of these. Thus, the signal processing system may be adapted to determine which of a plurality of thresholds has been attained by the user. In this way the user may be able to actuate more than a single switch.

The output signal of the sensor may be dependant on a user's physical actions throughout the sensor's active region. That is, the sensor may produce a continuously variable signal, such as a signal which is proportional to the input to the sensor.

The active range of the sensor may be relatively large to include the possible locations of the part of the body the user may use to operate the switching arrangement.

The sensor may be in the form of a force sensing device which generates an output signal in dependence on an applied force. Alternatively, the sensor may be in the form of a pressure sensing device which generates an output signal in dependence on an applied pressure.

The sensor may be adapted for direct contact by the user, or a compression device, for example a spring, may be provided so as to be between the sensor and the user.

The sensor may be arranged in a fixed position or may be mounted on a motor driven plunger for maintaining the position of the sensor relative to the user. Where a motor driven plunger is provided, the sensor, or a further sensor, may provide a control signal to the motor for returning the sensor, or first-mentioned sensor, to a required working position in order to re-activate the switch once it has been triggered.

The pressure sensor may include a fluid-filled reservoir for engagement by the user. The reservoir may be made of a flexible, for example elastomeric, material. The reservoir may be mounted on a headrest and compressed by contact with the user's head, or may be held in the user's fist allowing compression, or may be operated by contact with any other suitable part of the user's body.

Means may be provided to inflate and deflate the reservoir to maintain contact with the user.

As another alternative, the sensor may be in the form of a pointing device which generates an output signal in dependence upon the position or movements of the user. The pointing device may comprise a graphics tablet, a touch-screen, a touch-pad, a joystick, a mouse, a tracker-ball, a gaze direction tracker, or a hand position sensor which generates an output signal in dependence upon the position of the user's hand on the sensor pad.

As a further alternative, the sensor may be in the form of an optical device which generates an output signal in dependence upon movement of at least one reflective target. The reflective target may be an eye of the user or a separate target. The optical device may monitor the separation between two reflective targets.

The signal-processing system may detect and analyse cyclic elements of the output signal of the sensor that may result from relative movement between the user and the sensor due to involuntary movements such as "tremor" or vibration arising from external forces. Analysis may be performed by determining turning points in the waveform of the signal and/or by determining the amplitude of the output signal and/or by determining the frequency of the output signal and/or by determining the area under the curve of the waveform of the output signal.

The switching arrangement may include means for providing feedback to the user regarding the current status of the switching action. The feedback means may be audible and/or visual and/or tactile. The feedback means may be deactivated after a predetermined period of inactivity.

The switching arrangement may include means to return the sensor to a specific position relative to the user following its use.

The switching arrangement may include means for returning the part of the user's body which was used to activate the sensor back to its original position prior to activation.

For a better understanding of the present invention and to show more clearly how it may be carried into effect reference will now be made, by way of example, to the accompanying drawings in which:
Figure 1 is a schematic diagram of one embodiment of a switching arrangement according to the present invention;
Figure 2 illustrates a number of ways in which a sensor signal of the switching arrangement can be processed;
Figure 3 is a schematic diagram of another embodiment of a switching arrangement according to the present invention; and
Figure 4 is a schematic diagram of a further embodiment of a switching arrangement according to the present invention.

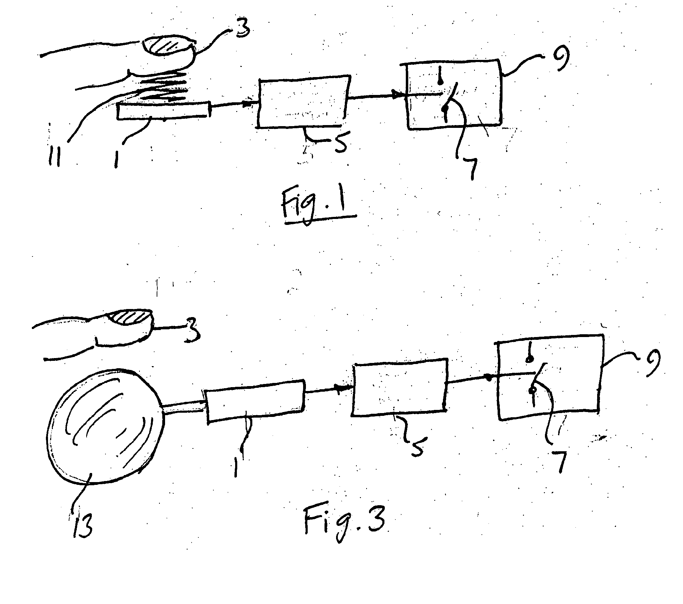

Figure 1 is a schematic representation of a switching arrangement according to the present invention for use by a user with minimal movement in an appendage 3, for example a finger or toe. A sensor 1 detects a physical action made by the user 3.

The sensor 1 is in the form of a force sensing device, for example a piezo-resistive silicon micro-machined sensor configured to respond to small changes in force, for example changes of about 1 gram force in a range from 0 grams to 1500 grams of force. The force sensor is activated by contact between the user 3 and the sensor 1. Slight pressure of, for example, the user's finger 3 on the sensor 1 generates a signal representative of the applied force, which signal is transmitted to a signal-processing system 5 in the form of a microprocessor unit.

That is, the signal is a continuously variable analogue signal and is not, for example, a step function.

Of course the pressure threshold can be set to any desired value, and can for example be set to activate only when the whole hand of the user is on the switch and not just a finger.

The output signal is processed by the signal-processing system 5 and is converted into a continuous (i.e., analogue) audio frequency signal, the frequency generated being proportional to the force detected by the sensor 1. A change in force can be used to activate a switch 7 in equipment 9. The algorithms used by the signal-processing system 5 to process the sensor signal are programmed to detect specific changes in sensor output according to the capabilities of the user, for example an applied force exceeding 500 g or exceeding 5 g, an increase in applied force (possibly from a non-zero base) greater than 500 g in 1 second, or an increase in applied force greater than 5 g in 2 seconds, or an increase in applied force of 10 g within 10 seconds, as a deliberate action to cause a switching event, whilst other actions are ignored. The algorithmic programmes are matched to respond to the deliberate movements possible for specific users and to ignore involuntary or other movements not defined as switching movements.

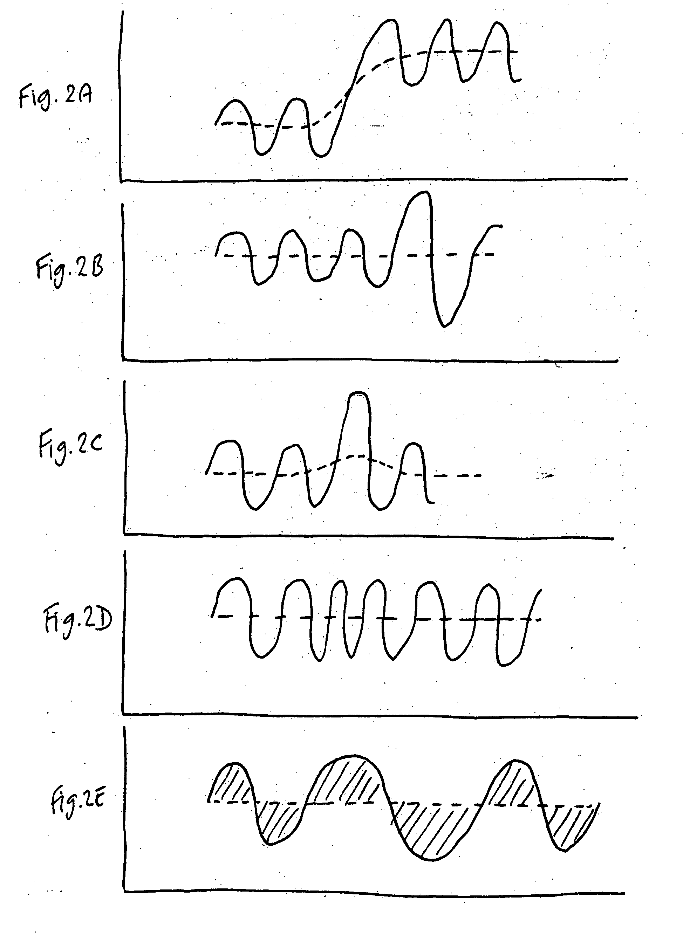

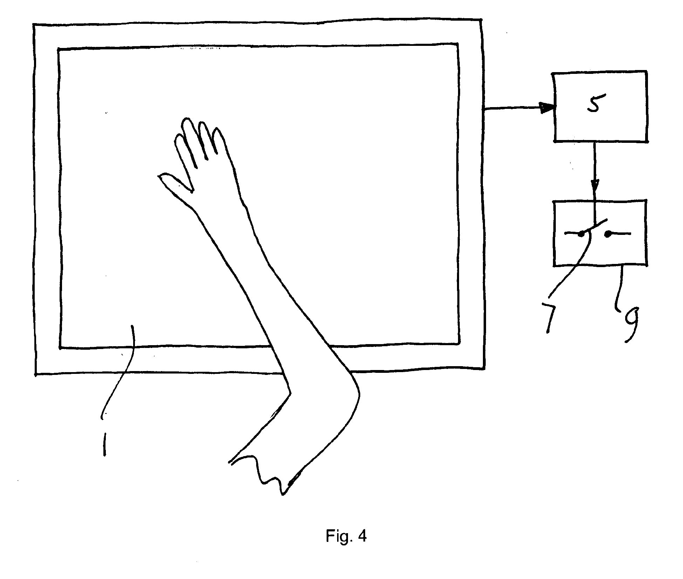

Alternatively, or additionally, it may be necessary to process an approximately cyclically varying applied force (for example due to an involuntary action such as "tremor") in order to detect a deliberate action superimposed on the involuntary action. Such cyclically varying forces are shown in Figure 2. In such a case the deliberate action may be represented by a change (increase or decrease) in one or more of the base level of the cyclic variation (Figure 2A), a change in the amplitude of the cyclic variation (Figure 2B and Figure 2C), or a change in the frequency of the cyclic variation (as represented by the frequency itself (Figure 2D) or by the area under the curve which represents the cyclic variation (Figure 2E).

The signal-processing system 5 may be programmed to compensate for changes in sensor output due to varying levels of stress and/or tiredness experienced by the user, for example by compensating for signal trends.

The signal-processing system 5 can be programmed to initiate a switching action when it detects very small changes in force within the larger sensing region of the sensor, or when it detects a deliberate physical action comprising a pattern of movements which in combination constitute a recognisable gesture.

When the signal-processing system 5 recognises an output caused by a deliberate action (or actions) on the part of the user, the system triggers a switch (or switches) 7 in equipment 9. Changes in sensor output determined by the signal-processing system 3 to be caused by involuntary actions are ignored and no switching action is initiated.

The deflection of the sensor associated with a force of 1500 grams may be 30 microns. Where the user can make larger movements than can be directly sensed by the sensor 1, it is still necessary to track the entire movement. To accomplish this, a compression device 11 can be positioned between the user 3 and the force sensor 1. The compression device may be, for example, a compression spring and the properties of the spring, for example a length of about 50 mm and a compliance of 10 mm per 100 g, are selected to allow such relatively large movements of the user's body to be tracked. These relatively large movements are detected and processed by the signal-processing system 5 as previously described.

Once a switching action has been initiated, the arrangement needs to be reset, in this case by allowing the applied force to fall to a predetermined level below the threshold level. For example, if the applied force required to initiate a switching action is 100 g, it may be required that the applied force falls below 90 g for the switching arrangement to be re-activated. Such a differential, or hysteresis, prevents multiple switching actions if the applied pressure remains in the region of 100 g.

In certain circumstances it may be desirable or necessary for the sensor to be physically movable relative to the user. In this case, a force sensor and any associated compression device are arranged such that they are mounted on a motor driven plunger (not shown). The plunger can be made to advance until a predetermined force is reached, for example 100 g, at which point the motor is stopped. This position represents a predetermined "base point" where the sensor is in what can be considered to be an ideal starting configuration. The force sensor 3 and the signal-processor 5 then look for a deliberate action on the part of the user as described hereinabove. Following a deliberate physical action by the user, the motorised plunger then retracts, such that the sensor output returns to a level corresponding to zero force, and is subsequently advanced once more to the "base point". In this way the sensor is repositioned in readiness for the next deliberate action by the user and is effectively reactivated. Thus the switching arrangement can be used with persons who are able to activate the sensor, but who are unable subsequently to release the applied force to allow the sensor to be re-activated.

If desired, means to actively reposition the user following a switching action can be incorporated into the motor-driven plunger. In this case, prior to the retraction of the motor-driven plunger, the plunger urges the part of the user's body employed to carry out the deliberate physical action back to its initial position, thus preventing the user from eventually being in a position where he can no longer make the required physical actions. The system design to carry out such a procedure of returning the user to his original position is dependant on the user's requirements in so far as whether it was, for example, a finger or a head that needed to be moved back to its original position, but the system design as such requires no inventive activity.

It should be noted the force sensor 1 may be employed to determine a tensile force as an alternative to determining a compressive force. For example, a wire under tension may be connected to the sensor 1.

Conventional switches provide a simple two-state output (for example, on or off) which changes when a trigger event occurs. This two-state output provides sufficient data for signal processing algorithms to be used in order to discriminate against the class of events known as "switch bounce"; that is, multiple unintentional switching events occurring in rapid succession. However, the simple two-state output provides insufficient data for signal processing algorithms to distinguish between other types of unintentional switching, particularly those produced by switch users with poor physical control.

For example, a switch user may wish to make a small finger movement to operate the switch, and to have the system ignore the large movements he makes due to muscle spasms. Although the spatial and temporal characteristics of these movements are very different, a simple two-state sensing system does not allow signal processing algorithms to be applied in order to distinguish between them.

In contrast, the present invention involves the generation of switching actions using sensors with substantially analogue or multi-state outputs which provide data which continuously describe the physical movements of the user and which allow signal processing algorithms to be applied in order to recognise specific characteristics of the user's switching activities to help distinguish between deliberate and inadvertent movements. The present invention makes use of this additional information, not to control the position of a cursor or to provide some other continuously varying output, but to provide simple switching outputs.

Different users have different types of inadvertent movement and have different types of movement they are able to make deliberately. For example, the types of inadvertent and deliberate movement differ for the three types of cerebral palsy (spastic, Athetoid and Ataxic), sufferers of Parkinson's disease, Motor neurone disease and Muscular dystrophy, multiple sclerosis and stroke victims.

Within each category, individuals may differ substantially in both characteristics of the deliberate movements they can make and the characteristics of inadvertent movements. For example, one user may be able to make a controlled thumb movement of about 10 mm, but suffer involuntary spasms that move his arm some 300 mm. Another user may have an oscillatory tremor giving a 10 mm lateral hand movement every second. Another user may be unable to reposition his hand, but able to make a 30 mm side-to-side rocking movement. Moreover, users may be in a wheelchair, the motion of which may induce further movements, such as hand movements of up to 10 mm or more.

The aim, therefore, is to assist individuals who wish to be able to make switching actions to operate equipment, the individuals as a group being able to make a wide variety of deliberate movements and a wide variety of inadvertent movements which makes it difficult or impossible for them to make reliable switching actions using conventional switches.

In order to discriminate between deliberate switching movements and inadvertent movements it is necessary to identify a physical difference between the deliberate and inadvertent movements. It is also necessary to sense the user's movements and to describe such movements in sufficient detail to make it possible to distinguish between deliberate and inadvertent movements using appropriate signal processing algorithms. For example, it may be necessary to detect movements which exceed or fall below a predetermined magnitude threshold or which fall within a predetermined range. For example, a deliberate switching action may be a movement greater than 5 mm but less than 50 mm and/or may be a movement greater than 5 mm occurring three times within 10 seconds and/or may be a movement in a particular direction, such as side-to-side and/or to-and-fro.

Figure 3 is a schematic representation of an alternative switching arrangement according to the present invention and comprises a sensor 1 in the form of an analogue pressure sensing device, for example a piezo-resistive silicon micro-machined sensor configured to respond to small changes in pressure, for example changes between 0 to 5 psi (0 to 17.25 KPa), changes of 0.05 psi (172.5 Pa) occurring within 5 seconds, or exceeding a threshold of 1 psi (3.5 KPa), according to the capabilities of the user. The force sensor is connected to a fluid-filled reservoir 13, for example a balloon or bulb which may be filled with liquid or gas (such as air). The reservoir is made of a flexible, for example elastomeric, material. The action of applying pressure to the reservoir 13, for example by the users foot, hand or head, generates a pressure representative of the applied force and which is detected by the sensor 1. An advantage of the reservoir is that movement in any direction can be used to activate the switching arrangement and that the positioning of the sensor and the direction of movement are less critical than in the embodiment of Figure 1. The sensor 1 generates a signal representative of the applied force which is transmitted to the signal-processing system 5. The signal-processing system 5 generates a continuous audio frequency signal, the frequency generated being proportional to the pressure detected by the sensor 1. A change in pressure can be used to activate a switch 7 in equipment 9 as described above. Thus, the signal-processing system 5 analyses the signal and determines whether a deliberate action has taken place and, if so, a switching action is effected in the equipment 9.

The sensor may be used to detect lifting-off, i.e., a reduction in pressure, as an alternative to an increase in pressure.

In order to maintain contact between the user and the reservoir, the reservoir 13 can be fitted with a means for adjusting its internal volume by either increasing or reducing the content of the reservoir.

Figure 4 is a schematic representation of a further pointing device according to the present invention, for use by a person able to make hand or finger movements, albeit poorly controlled. An analogue sensor 1 detects either the position or movement of the user's hand and arm on the sensor.

The sensor 1 of Figure 4 is in the form of a number of capacitance-sensing transducers which determine the presence of the user by means familiar to those skilled in the art. The signal processing may be programmed to respond to specific positions of the hand or to specific types of hand or finger movement. Algorithms may be employed to detect specific characteristics of the sensed movements with the aim of distinguishing between deliberate switching actions and other movements not intended to activate the switch(es).

The switching arrangement may alternatively comprise an analogue optical tracker to sense the position of a reflective target, or a gaze direction tracker to sense the direction of the user's gaze. When a specific deliberate movement or gesture is made by the user, the reflective target, such as the user's eye, is moved initiating a change in the output signal of the optical tracker. The signal-processing system 5 determines whether the gesture was deliberate based on pre-programmed parameters and if required initiates a switching action. A differential monitoring system can be used in cases where sensing of a specific movement resulting in the differential movement of two parts of the user is required and which ignores common-mode movement of those two parts of the user. In this case the sensor monitors the separation of two reflectors, for example one above and one below the eyebrow of a user. If the whole head is moved no change occurs to the separation of the reflectors and no change in the output of the tracker is initiated. If, however, the user undertakes a deliberate action, for example a deliberate frowning action, the spacing between the two reflectors is changed, the difference is detected by the tracker and an output signal is transmitted to the signal-processor system 5 where it is used to initiate a switching action. For example, a deliberate action in the form of a frowning motion which results in a change of 1 mm in the separation between two reflectors can be used to activate the switching arrangement, while lateral movements of the head by, for example, about 100 mm are ignored. Alternatively, the tracker may be used to track, without the need for physical contact, the position of a user's finger in a volume of about 1 cubic metre and to respond to a specific gesture of dwell, move left by 10 mm, then return to the start position.

Where the user is physically able to make a movement which causes an analogue response from a standard pointing device (such as a graphics tablet, touch screen, touch pad, joystick, mouse or tracker-ball), the device may be utilised as a sensor. Where only slight mobility, for example of a finger, on a horizontal surface is possible, the sensor can be in the form of a graphics tablet, a touch-screen or a touch pad. Where there is greater mobility available to the user, a pointing device such as a joystick, mouse or tracker-ball can be utilised.

Independent of the type of pointing device used, the output signal from the pointing device is processed using the algorithms of the signal-processing system 5 and analysed for pre-determined deliberate movements which indicate that the user wishes to initiate a switching action. That is, the signal from the pointing device is analysed for movement, not for pointing at a specific location. For example, a movement of 10 mm to the left and back to the starting point may be used to generate a "left click", this movement taking place anywhere within the area of an A3 size graphics tablet. Alternatively, the movement may be a 1 mm deliberate gesture on a 50 x 40 mm touchpad.

An involuntary repetitive movement, such as "tremor", whether it be in one, two or three dimensions, is eliminated by tracking the "turning points" of the signal from the sensor and computing the midpoint of each pair of turning points. The sensor output is then updated to that midpoint. Thus movements, or excursions, which are corrected result in no movement of the cursor, while a movement, or excursion, which is not corrected, such as a deliberate movement to the left (for example), and is interpreted as a deliberate physical action.

In specific cases it may be more appropriate that the switching arrangement utilises sensors which employ magnetic fields, ultrasonic frequencies, radio frequencies, electrical signals such as electro-encephelogram or myo-electric signals, or galvanic skin resistance as a means of initiating a switching action in response to a deliberate physical action performed by the user.

In the case of all of the above described embodiments, means known to a skilled person may be employed to provide feedback to the user enabling his progress in producing a suitable deliberate physical action to be monitored. This is particularly beneficial when the user is learning to develop the necessary control to operate the switching arrangement. For example, feedback can indicate to the user that the effort they are expending, if sustained for longer, will achieve the required result.

Feedback may be, for example, audible and/or visual and/or tactile and may be representative of the output of the sensor and/or the output of the sensor relative to a switching threshold. The feedback, particularly when audible, may be deactivated after a predetermined period of inactivity to prevent it becoming a nuisance.

Thus, an audible tone may be proportional to pressure, force or distance, a click being generated when a threshold pressure is exceeded so as to operate the switch. At pressures (for example) above the threshold an audible tone is still helpful to assist the user in reducing the applied pressure to a level required to re-activate the switching arrangement. For example, the frequency of the tone may be proportional to pressure and/or above the threshold the tone may be pulsed to differentiate between pressures sufficient to operate the switch and pressures insufficient to operate the switch. In this way the user knows whether he is increasing or reducing the applied pressure.

Visual feedback may be provided, for example, by an array of light-emitting diodes (LEDs) or an LED bargraph, with the number of illuminated LEDs indicating pressure (for example) and the colour of the LEDs indicating whether or not the pressure is above the threshold.

It is also possible for a sensor to have more than one threshold value in order to allow the user to control more than a single switch.

## Claims

1. A switching arrangement comprising:
a sensor (1) for detecting physical actions of a user (3) within a region of space in which the user is located, the sensor generating an output signal representative of a detected physical action; and
a signal-processing system (5) for receiving the output signal of the sensor, the signal-processing system being adapted to analyse the output signal to determine whether the user has made a deliberate physical action and for actuating at least one switch (9) on detection of such a deliberate physical action.

2. A switching arrangement as claimed in claim 1, **characterised in that** a deliberate physical action is defined in terms of the size range of a movement, for example greater than 5 mm but less than 50 mm.

3. A switching arrangement as claimed in claim 1 or 2, **characterised in that** a deliberate physical action is defined in terms of the time at which a movement occurs, for example three movements of greater than 5 mm within 10 seconds.

4. A switching arrangement as claimed in any preceding claim, **characterised in that** a deliberate physical action is defined in terms of the direction of a movement, for example substantially side-to-side and/or substantiallyto-and-fro.

5. A switching arrangement as claimed in any preceding claim, **characterised in that** the generated signal is an analogue signal.

6. A switching arrangement as claimed in claim 5, **characterised in that** the signal processing system (5) includes means for processing the analog signal to determine whether it has a predetermined value, for example whether it exceeds a predetermined threshold or falls within a predetermined range.

7. A switching arrangement as claimed in any preceding claim, **characterised in that** the signal processing system (5) is adapted to determine the nature of the deliberate physical action made by the user, for example in terms of size, direction, time or any combination of these.

8. A switching arrangement as claimed in claim 7, **characterised in that** the signal processing system (5) is adapted to determine which of a plurality of thresholds has been attained by the user.

9. A switching arrangement as claimed in any preceding claim, **characterised in that** the sensor (1) produces a continuously variable signal, for example as a signal which is proportional to the input to the sensor.

10. A switching arrangement as claimed in any preceding claim, **characterised in that** the sensor (1) is in the form of a force sensing device which generates an output signal in dependence on an applied force.

11. A switching arrangement as claimed in any one of claims 1 to 9, **characterised in that** the sensor (1) is in the form of a pressure sensing device which generates an output signal in dependence on an applied pressure.

12. A switching arrangement as claimed in any one of claims 1 to 9, **characterised in that** the sensor (1) is in the form of a pointing device which generates an output signal in dependence upon the position or movements of the user.

13. A switching arrangement as claimed in any one of claims 1 to 9, **characterised in that** the sensor (1) is in the form of an optical device which generates an output signal in dependence upon movement of at least one reflective target.

14. A switching arrangement as claimed in any preceding claim, **characterised in that** the signal-processing system (5) includes means for detecting and analysing cyclic elements of the output signal of the sensor resulting from relative movement between the user and the sensor (1) due to involuntary movements.

15. A switching arrangement as claimed in claim 14, **characterised in that** the analysing means of the signal processing system (5) includes at least one of means for determining turning points in the waveform of the signal, and means for determining the amplitude of the output signal, and means for determining the frequency of the output signal, and means for determining the area under the curve of the waveform of the output signal.

16. A switching arrangement as claimed in any preceding claim, **characterised by** including means for providing feedback to the user regarding the current status of the switching action.

17. A switching arrangement as claimed in claim 16, **characterised in that** the feedback means is selected from at least one of audible means, visual means, and tactile means.

18. A switching arrangement as claimed in claim 16 or 17, **characterised in that** means is provided for deactivating the feedback means after a predetermined period of inactivity.

19. A switching arrangement as claimed in any preceding claim, **characterised by** including means to return the sensor (1) to a specific position relative to the user following its use.

20. A switching arrangement as claimed in any preceding claim, **characterised by** including means for returning the part of the user's body which was used to activate the sensor (1) back to its original position prior to activation.
